# EUROPEAN PATENT SPECIFICATION

(11) **EP 0 928 588 B1**
(45) Date of publication and mention of the grant of the patent: **14.05.2003**
(21) Application number: 99300146.0
(22) Date of filing: 08.01.1999
(51) Int. Cl.: A47J 27/022, A47J 27/00

(54) **Article of cookware with non-stick coating and method of forming the same**
Kochgerät mit einer Anti-Haftschicht und Verfahren zum Formen desselben
Dispositif de cuisson avec une couche anti-adhérente et méthode pour former un tel

(30) Priority: 09.01.1998 GB 9800513
(43) Date of publication of application: 14.07.1999
(73) Proprietor: MEYER MANUFACTURING CO., LTD, Hong Kong (HK)
(72) Inventor: Cheng, Stanley Kin-Sui, Kwun Tong, Kowloon (HK)
(74) Representative: Findlay, Alice Rosemary

(56) References cited:
- EP-A- 0 799 660
- GB-A- 2 265 543
- US-A- 4 607 512

## Description

The present invention relates to an article of cookware having an exterior bottom heat-receiving surface which is partly coated by a non-stick coating, and to a method of forming the same.

It is well-known to coat the inner cooking surface of an article of cookware with a non-stick coating. Such coatings greatly reduce the adherence of food on the article of cookware having benefits both during cooking in that the food does not stick onto the cooking surface, and for cleaning the cookware after use. The most commonly used coatings are fluoropolymere such as polytetrafluoroethylene (PTFE).

Although such non-stick coatings are applied to the inner cooking surface of cookware products, it is also desirable to employ such coatings on the outer side walls and on the bottom surface, where the coating is still beneficial in that any food which adheres can be easily removed. The problem exists in that such coatings when subjected to high heat can create fumes which have a degree of toxicity. Although ouch fumes are not dangerous to humans, they can be dangerous to household pets with relatively weak respiratory systems, in particular small birds. It has been proposed to form an article of cookware having a non-stick coating extending down the outer side wall, but where the coating is absent or has been removed in its entirety from the bottom or base of the article leaving only exposed metal.

It is nevertheless desirable to further extend the non-stick coating onto the bottom surface.

According to the present invention there is provided an article of cookware having an exterior bottom surface which is formed with a pattern of closely spaced depressions and projecting portions therebetween, the depressions being coated with a non-stick coating which is absent from the protruding portions.

The article has the benefit that the bottom surface is partly coated with a non-stick coating giving the surface a degree of non-stick quality and reducing the adherence of foods thereon, whilst exhibiting reduced susceptibility to emission of potentially toxic fumes when subjected to high heating.

Preferably, the pattern of depressions and projecting portions extends across substantially the entire bottom surface.

The non-stick coating is preferably applied to the inner cooking surface of the article and the inner and outer side walls thereof.

In one embodiment the pattern comprises a plurality of regularly spaced generally circular depressions.

In an alternative arrangement, the pattern comprises generally square depressions formed on a grid-like pattern.

In a still further arrangement, the pattern of depressions comprises a plurality of concentric grooves.

Preferably, the relatively protruding portions comprise regions of exposed metal from which the non-stick coating has been removed. The coating may be removed either by a machining process using a grinding machine, or by some other abrading or sanding process.

In a further aspect, the invention resides in a process for forming in an article of cookware including a non-stick coating on part of its exterior bottom surface comprising:
(a) coating the bottom surface with a non-stick coating;
(b) forming in said bottom surface a pattern comprising a plurality of closely spaced depressions and relatively protruding regions therebetween; and
(c) removing the non-stick coating from the protruding regions.

In the preferred process the non-stick coating is applied to a metal blank prior to its formation into the desired shape of the article of cookware. The pattern of depressions and protrusions may also be formed in the blank before the blank is formed into the desired article of cookware.

Preferably, the plurality of depressions and protrusions are formed by a stamping process in a screw press. The non-stick coating is preferably removed by a machining or grinding or other abrading process to leave exposed metal at the relatively protruding portions.

Embodiments of the invention will now be described, by way of example only, with reference to the following drawings in which:
Figure 1 is a view of an article of cookware according to an embodiment of the invention showing the bottom surface thereof;
Figure 2 is a cross-sectional view across a portion of the base of the article of cookware of Figure 1;
Figure 3 shows an article of cookware from below having an alternative pattern of depressions and protrusions formed in the bottom surface;
Figure 4 is an enlarged cross-sectional view in a radial direction across a portion of the article of cookware of Figure 3; and
Figure 5 shows a further alternative pattern of depressions and protrusions.

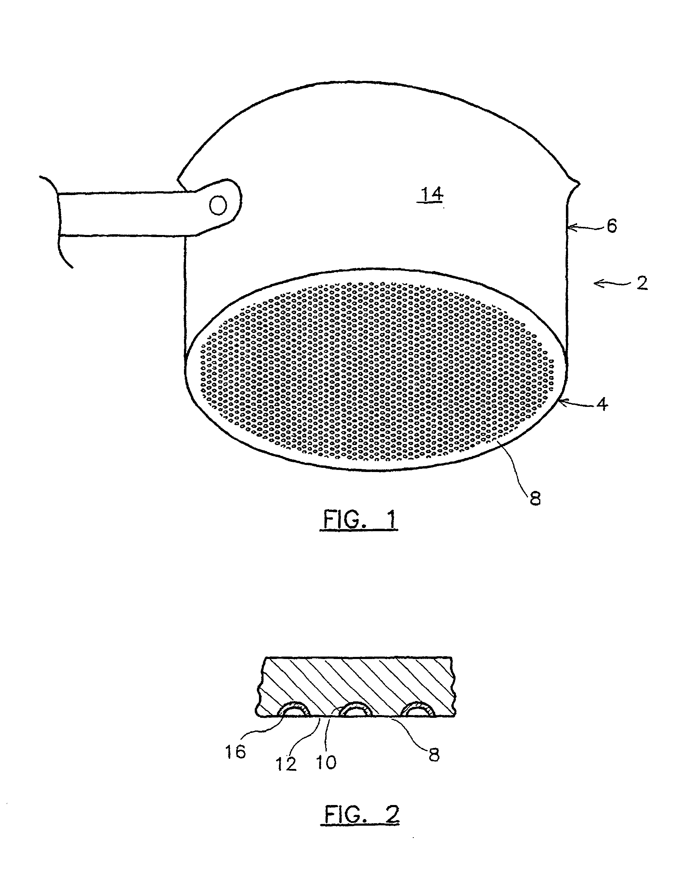

Turning to the Figures, Figure 1 shows an article of cookware, in this case saucepan 2 in accordance with an embodiment of the present invention. Although a saucepan is shown, the article of cookware can take many other forms such as a frying pan, stock pan, casserole etc. The saucepan 2 may be formed of a variety of materials but most conveniently will be of aluminium. Alternatively, more complex structures such as aluminium clad with steel may also benefit from the invention. The saucepan 2 includes a base 4 and side wall 6. The base 4 has a lower or bottom heat-receiving surface 8 which is formed with a pattern comprising a large number of depressions 10 separated by relatively protruding portions 12, as better seen in Figure 2. As illustrated for this embodiment the depressions 10 are of generally circular shape having a generally part-circular cross-section, typically of depth 1-2mm.

The inner cooking surface of the saucepan is preferably coated in a non-stick coating, which extends also onto the inner and outer surfaces of the side wall 14. The non-stick coating is also provided within the depressions 10, as indicated at 16 in Figure 2. The non-stick coating may be one of a number of different non-stick compositions, but it is commonly of a fluoropolymer such as polytetrafluoroethylene (PTFE). The coating is preferably applied to the metal substrate in a number of layers including a primer coat, a PTFE intermediate coat and a PTFE top coat in a conventional manner.

The saucepan 2 is formed in the following manner. A metal blank of aluminium is formed comprising a flat metal disc. To this blank the non-stick coating is applied to both opposite faces thereof using a roller-coating technique. Subsequently, the base pattern is applied to the face of the blank which is destined to become the bottom surface of the saucepan by a stamping or embossing process in a screw press. In this process the blank surface is impacted by a ram having a plurality of protrusions which deform the surface of the blank, whilst nonetheless not damaging the non-stick coating in these regions, producing the pattern of depressions 10 separated by relatively protruding portions 12.

The coated disc blank having the patterns of depressions and protrusions is then deformed into the desired article of cookware, in this case a saucepan, in a further stamping process employing a press which constrains the article in such a manner as to not to damage the pattern of depressions and protrusions.

Finally, the bottom 8 of the saucepan 2 is then machined in order to remove the non-stick coating from the relatively protruding portions 12 until the metal is exposed at these regions, whilst leaving the non-stick coating 16 within the depressions 10.

As an alternative, it is also possible for relatively shallow pans such as frying pane to emboss the pattern of depressions and protrusions at the same time as the pan is formed from the blank.

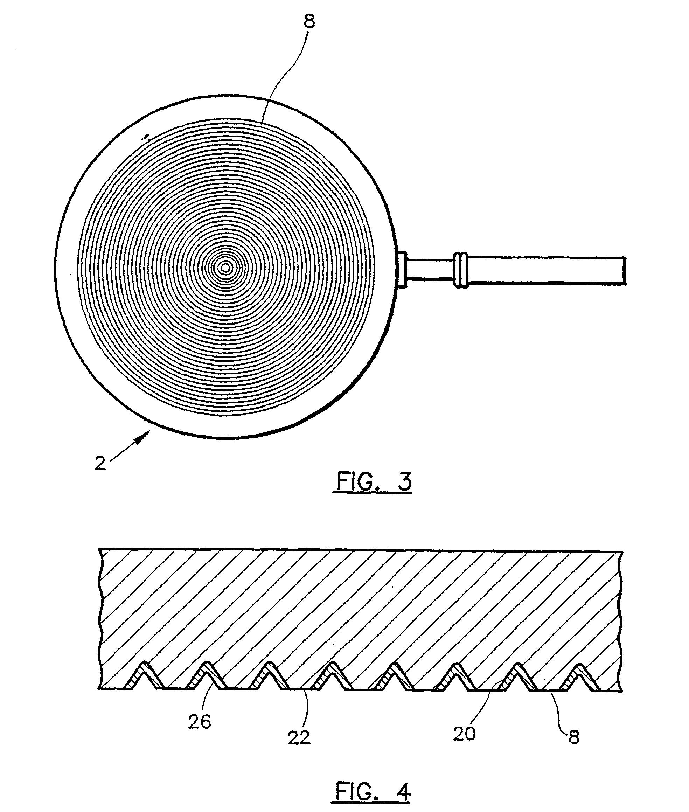

An alternative pattern of depressions and protrusions is shown in Figures 3 and 4, in which the depressions are formed as concentric circular grooves 20, separated by protrusions 22, the grooves being coated with thickness of non-stick coating 26.

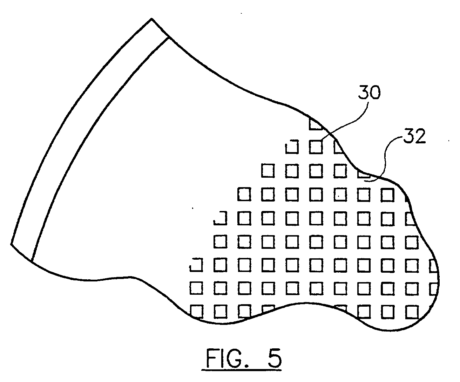

A still further pattern of depressions and protrusions is shown in Figure 5 in which the depressions 30 of generally square form are arranged in a grid-like pattern between ridges 32. The depressions 30 likewise have a non-stick coating of PTFE.

Although the patterns shown have a regular arrangement of depressions and protrusions, it is also quite possible to provide an irregular pattern, or to provide regions of different patterns across the surface of the base.

The structure as described results in a saucepan having a bottom surface which has a partly non-stick quality such that the surface is relatively easy to clean, and yet the degree of non-stick coating is limited so that any potentially toxic fumes are limited to a safe degree. Moreover, the compression of the metal substrate on forming of the pattern of depressions and protrusions partially in an aluminium base can also have the effect of hardening the material, which results in articles having reduced susceptibility to warpage during normal cooking.

## Claims

1. An article of cookware (2) having an exterior bottom surface (8) which is formed with a pattern of closely spaced depressions (10;20) and projecting portions (12;22) therebetween, the depressions (10;20) being coated with a non-stick coating (16;26) which is absent from the protruding portions (12;22).

2. An article of cookware (2) according to claim 1 wherein the pattern of depressions and projecting portions extends across substantially the entire bottom surface.

3. An article of cookware (2) according to claim 1 or 2 wherein the non-stick coating (16;26) is preferably applied to the inner cooking surface of the article (2) and the inner and outer side walls thereof.

4. An article of cookware (2) according to claim 1, 2 or 3 wherein the pattern comprises a plurality of regularly spaced generally circular depressions.

5. An article of cookware (2) according to claim 1, 2 or 3 wherein the pattern comprises generally square depressions (30) formed on a grid-like pattern.

6. An article of cookware (2) according to claim 1, 2 or 3 wherein the pattern of depressions comprises a plurality of concentric grooves.

7. An article of cookware (2) according to any one of claims 1 to 6 wherein the relatively protruding portions comprise regions of exposed metal from which the non-stick coating has been removed.

8. A process for forming in an article of cookware (2) including a non-stick coating (16;26) on part of its exterior bottom surface (8) comprising:
(a) coating the bottom surface (8) with a non-stick coating (16;26);
(b) forming in said bottom surface (8) a pattern comprising a plurality of closely spaced depressions (10;20) and relatively protruding regions (12;22) therebetween; and
(c) removing the non-stick coating (16;26) from the protruding regions (12;22).

9. A process according to claim 8 wherein the non-stick coating (16;26) is applied to a metal blank prior to its formation into the desired shape of the article of cookware (2).

10. A process according to claim 8 or 9 wherein the pattern of depressions and protrusions may also be formed in the blank before the blank is formed into the desired article of cookware.

11. A process according to claim 8, 9 or 10 wherein the plurality of depressions (10;20) and protrusions (12;22) are formed by a stamping process in a screw press.

12. A process according to any one of claims 8 to 11 wherein the non-stick coating (16;26) is removed from the protruding regions by a machining or grinding process.

## Patentansprüche

1. Kochgeschirrartikel (2) mit einer äußeren Bodenfläche (8), die mit einer Struktur aus dicht beabstandeten Vertiefungen (10; 20) und hervorstehenden Teilen (12; 22) dazwischen ausgebildet ist, wobei die Vertiefungen (10; 20) mit einer nichthaftenden Beschichtung (16; 26) beschichtet sind, die an den hervorstehenden Teilen (12; 22) fehlt.

2. Kochgeschirrartikel (2) gemäß Anspruch 1, bei dem sich die Struktur der Vertiefungen und hervorstehenden Teile im wesentlichen über die gesamte Bodenfläche erstreckt.

3. Kochgeschirrartikel (2) gemäß Anspruch 1 oder 2, bei dem die nichthaftende Schicht (16; 26) vorzugsweise auf die innere Kochfläche des Artikels (2) und seine Innen- und Außenseitenwände aufgebracht ist.

4. Kochgeschirrartikel (2) gemäß Anspruch 1, 2 oder 3, bei dem die Struktur eine Vielzahl gleichmäßig beabstandeter allgemein kreisförmiger Vertiefungen umfasst.

5. Kochgeschirrartikel (2) gemäß Anspruch 1, 2 oder 3, bei dem die Struktur in einem gitterartigen Muster ausgebildete, allgemein rechteckige Vertiefungen (30) umfasst.

6. Kochgeschirrartikel (2) gemäß Anspruch 1, 2 oder 3, bei dem die Struktur aus Vertiefungen mehrere konzentrische Rillen umfasst.

7. Kochgeschirrartikel (2) gemäß einem der Ansprüche 1 bis 6, bei dem die relativ hervorstehenden Teile Bereiche aus ungeschütztem Metall umfassen, von denen die nichthaftende Beschichtung entfernt wurde.

8. Verfahren zum Ausbilden eines Kochgeschirrartikels (2) mit einer nichthaftenden Beschichtung (16; 26) auf einem Teil seiner äußeren Bodenfläche (8), umfassend:
(a) Beschichten der Bodenfläche (8) mit einer nichthaftenden Boschichtung (16; 26);
(b) Abbilden einer Struktur in der Bodenfläche (8), die eine Vielzahl dicht beabstandeter Vertiefungen (10; 20) und relativ hervorstehender Bereiche (12; 22) dazwischen umfasst; und
(c) Entfernen der nichthaftenden Beschichtung (16; 26) von den hervorstehenden Bereichen (12; 22).

9. Verfahren gemäß Anspruch 8, bei dem die nichthaftende Beschichtung (16; 26) vor der Formung eines Metallrohlings in die gewünschte Form des Kochgeschirrartikels (2) aufgebracht wird.

10. Verfahren gemäß Anspruch 8 oder 9, bei dem die Struktur der Vertiefungen und Vorsprünge ebenfalls im Rohling ausgebildet werden kann, bevor der Rohling In den gewünschten Kochgeschirrartikel umgeformt wird.

11. Verfahren gemäß Anspruch 8, 9 oder 10, bei dem die Vielzahl der Vertlefungen (10; 20) und Vorsprünge (12; 22) durch einen Stanzprozess in einer Schraubenpresse ausgebildet werden.

12. Verfahren gemäß einem der Ansprüche 8 bis 11, bei dem die nichthaftende Beschichtung (16; 26) durch einen spannendes oder schleifendes Bearbeitungsverfahren von den hervorstehenden Bereichen entfernt wird.

## Revendications

1. Elément de batterie de cuisine (2) comportant une surface de fond extérieure (B) qui comporte un motif de creux étroitement espacés (10 ; 20) et de parties saillantes (12 ; 22) entre ceux-ci, les creux (10 ; 20) étant recouverts d'un revêtement antiadhésif (16 ; 26) qui est absent des parties saillantes (12 ; 22).

2. Elément de batterie de cuisine (2) selon la revendication 1, dans lequel le motif de creux et de parties saillantes s'étend sensiblement sur toute la surface de fond.

3. Elément de batterie de cuisine (2) selon la revendication 1 ou 2, dans lequel le revêtement antiadhésif (16 ; 26) est, de préférence, appliqué à la surface de cuisson intérieure de l'élément (2) et à ses parois latérales intérieure et extérieure.

4. Elément de batterie de cuisine (2) selon la revendication 1, 2 ou 3, dans lequel le motif comprend une pluralité de creux généralement circulaires régulièrement espacés.

5. Elément de batterie de cuisine (2) selon la revendication 1, 2 ou 3, dans quel le motif comprend des creux généralement carrés (10) formés sur un motif semblable à une grille.

6. Elément de batterie de cuisine (2) selon la revendication 1, 2 ou 3, dans lequel le motif de creux comprend une pluralité de sillons concentriques.

7. Eléments de batterie de cuisine (2) selon l'une quelconque des revendications 1 à 6, dans lequel les parties relativement saillantes comprennent des régions de métal exposé desquelles le revêtement antiadhésif a été retiré.

8. Processus pour former un élément de batterie de cuisine (2) comprenant un revêtement antiadhésif (16 ; 26) sur une partie de sa surface de fond extérieur (8) comprenant :
(a) le recouvrement de la surface de fond (8) par un revêtement antiadhésif (16 ; 26) ;
(b) la formation, dans ladite surface de fond (8), d'un motif comprenant une pluralité de creux étroitement espacés (10 ; 20) et de régions relativement saillantes (12 ; 22) entre ceux-ci ; et
(c) le retrait du revêtement antiadhésif (16 ; 26) des régions saillantes (12 ; 22).

9. Processus selon la revendication 8, dans lequel le revêtement antiadhésif (16 ; 26) est appliqué à une pièce brute métallique avant sa mise en forme sous la forme souhaitée de l'élément de batterie de cuisine (2).

10. Processus selon la revendication 8 ou 9, dans lequel le motif de creux et de saillies peut également être formé dans la pièce brute avant que la pièce brute ne soit formée en l'élément souhaité de batterie de cuisine.

11. Processus selon la revendication 8, 9 ou 10, dans lequel la pluralité de creux (10 ; 20) et de saillies (12 ; 22) est formée par un processus d'estampage dans une presse à vis.

12. Processus selon l'une quelconque des revendications 8 à 11, dans lequel le revêtement antiadhésif (16 ; 26) est retiré des régions saillantes par un processus d'usinage ou de meulage.
